(19) Europäisches Patentamt
European Patent Office
Office européen des brevets

(11) Veröffentlichungsnummer: **0 012 300**
**B1**

(12) # EUROPÄISCHE PATENTSCHRIFT

(45) Veröffentlichungstag der Patentschrift: **01.12.82**

(51) Int. Cl.³: **C 09 B 69/10,** C 09 B 23/14, C 09 B 23/04, D 21 H 3/00

(21) Anmeldenummer: **79104812.7**

(22) Anmeldetag: **01.12.79**

(54) **Farbige polymere Verbindungen, Verfahren zu deren Herstellung und ihre Verwendung beim Färben von Papier.**

(30) Priorität: **07.12.78 DE 2852919**

(43) Veröffentlichungstag der Anmeldung: **25.06.80 Patentblatt 80/13**

(45) Bekanntmachung des Hinweises auf die Patenterteilung: **01.12.82 Patentblatt 82/48**

(84) Benannte Vertragsstaaten: **BE CH DE FR GB IT NL**

(56) Entgegenhaltungen:
**DE-A-2 733 468**
**GB-A-2 011 457**
**US-A-3 597 434**

(73) Patentinhaber: **BASF Aktiengesellschaft, Carl-Bosch-Strasse 38, D-6700 Ludwigshafen (DE)**

(72) Erfinder: **Degen, Hans-Juergen, Dr. Dipl.-Chem., Schillerstrasse 6, D-6143 Lorsch (DE)**

**EP 0 012 300 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Farbige polymere Verbindungen, Verfahren zu deren Herstellung und ihre Verwendung beim Färben von Papier.

Die Erfindung betrifft Verbindungen der allgemeinen Formel I

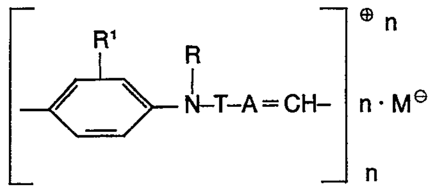

I,

in der

A der Rest einer quarternierten, methylenaktiven Verbindung,

R gegebenenfalls substituiertes Alkyl, Cycloalkyl oder Phenyl,

$R^1$ Wasserstoff, Chlor, Brom, Hydroxy, $C_1$- bis $C_4$-Alkyl oder $C_1$- bis $C_4$-Alkoxy,

T einen gegebenenfalls durch Halogen, $C_1$–$C_4$-Alkoxy oder Hydroxy substituierten Alkylenrest oder einen Rest der Formel

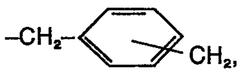

$M^{\ominus}$ ein Anion und

n eine Zahl > 1 bedeuten.

Die Reste A entsprechend vorzugsweise der allgemeinen Formel

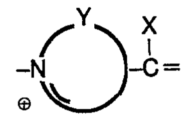

wobei

X Wasserstoff, gegebenenfalls substituiertes $C_1$–$C_4$-Alkyl, $C_1$- bis $C_4$-Alkoxycarbonyl, Cyan oder gegebenenfalls substituiertes Carbamoyl ist und

Y die Ergänzung zu einem Heterocyclus bedeutet, X kann dabei auch gemeinsam mit Y einen carbocyclischen Ring bilden.

Reste A sind beispielsweise im einzelnen:

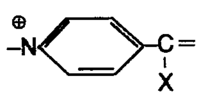 , 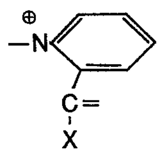 , 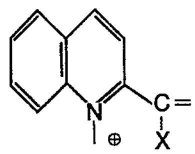 , 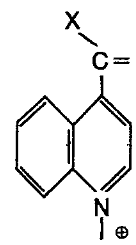 ,

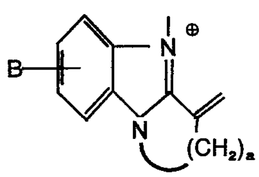 , 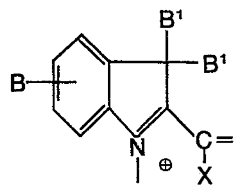 , 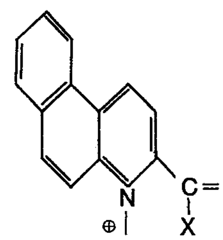

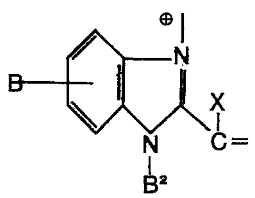 , 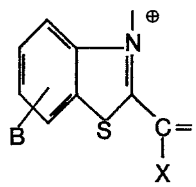 , 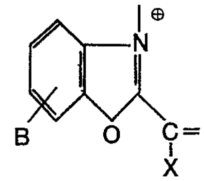 oder 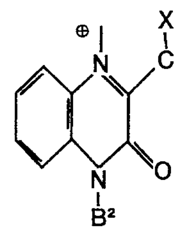 ,

wobei a die Zahl 2, 3 oder 4,

B Wasserstoff, gegebenenfalls substituiertes $C_1$–$C_4$-Alkyl, gegebenenfalls substituiertes Benzyl, $C_1$–$C_4$-Alkoxy, Halogen, $C_1$–$C_4$-Alkylamino oder Dialkylamino, Nitro, $C_1$–$C_4$-Alkoxycarbonyl, Carbamoyl oder Cyan,

$B^1$ gegebenenfalls substituiertes Alkyl,

$B^2$ gegebenenfalls substituiertes $C_1$–$C_4$-Alkyl oder gegebenenfalls substituiertes Benzyl bedeuten und

X die angegebene Bedeutung hat.

Carbamoylreste X sind beispielsweise: $CONH_2$, $CONHCH_3$, $CONHC_2H_5$, $CONHC_4H_9$, $CONHC_8H_{17}$,

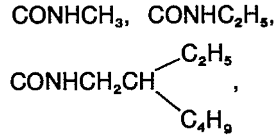 , $CONHC_6H_5$,

$CONHCH_2CH_2CH_3$ oder $CONHCH_2CH_2N(CH_3)_2$ sowie die entsprechenden disubstituierten Reste. Alkoxycarbonylreste X haben insbesondere 1 bis 4 C-Atome, beispielsweise seien Methoxy-, Äthoxy- oder Butoxycarbonyl genannt.

Alkylreste R sind z.B. $C_1$- bis $C_{12}$-Alkyl, das noch durch Chlor, Brom, Cyan, Hydroxy, $C_1$–$C_4$-Alkoxy, Amino, $C_1$–$C_4$-Alkylamino oder Dialkylamino, Aryl, $C_1$–$C_4$-Alkoxycarbonyl oder gegebenenfalls N-mono- oder N,N-di-$C_1$- bis $C_4$-alkylsubstituiertes Carbamoyl substituiert sein kann.

Im einzelnen seien für R beispielsweise genannt: Methyl, Äthyl, Propyl, Isopropyl, n-Butyl, iso-Butyl, Benzyl, Phenyläthyl, Methoxyäthyl, Äthoxyäthyl, n- und iso-Propoxyäthyl, Chloräthyl, Bromäthyl, Methoxycarbonyläthyl, Äthoxycarbonyläthyl, Dimethylaminoäthyl, Methylaminoäthyl, Aminoäthyl, Dimethylaminocarbonyläthyl, Aminocarbonyläthyl, Cyanäthyl, Chlorpropyl, Chlorbutyl, 2-Hydroxypropyl, 2-Hydroxy-3-chlorpropyl, Aminocarbonylmethyl, Cyanmethyl, Cyclopentyl, Cyclohexyl, Cycloheptyl, Phenyl, Tolyl, Chlorphenyl oder Methoxyphenyl. Reste $R^1$ sind neben Wasserstoff, Chlor und Brom insbesondere Methyl, Äthyl, Methoxy, Äthoxy, Aminocarbonyl, Methoxycarbonyl, Äthoxycarbonyl und Nitro.

Alkylenreste T sind z.B. $-\underset{CH_3}{\underset{|}{CH}}-CH_2-$, $-(CH_2)_3-$, $-(CH_2)_4-$ oder $-(CH_2)_5-$ und insbesondere $-C_2H_4-$.

Als Anionen $M^{\ominus}$ sind beispielsweise zu nennen: Fluorid, Chlorid, Bromid, Jodid, Perchlorat, Hydrogensulfat, Sulfat, Aminosulfat, Nitrat, Dihydrogenphosphat, Hydrogenphosphat, Phoasphat, Hydrogencarbonat, Carbonat, Methosulfat, Äthosulfat, Cyanat, Thiocyanat, Tetrachlorozinkat, Borat, Tetrafluoroborat, Acetat, Chloracetat, Cyanacetat, Hydroxyacetat, Aminoacetat, Methylaminoacetat, Di- und Trichloracetat, 2-Chlorpropionat, 2-Hydroxypropionat, Glycolat, Thioglycolat, Thioacetat, Phenoxyacetat, Trimethylacetat, Valerat, Palmitat, Acrylat, Oxalat, Malonat, Crotonat, Succinat, Zitronat, Methylenbisthioglycolat, Äthylenbisiminoacetat, Nitrilotriacetat, Fumarat, Maleat, Benzoat, Methylbenzoat, Chlorbenzoat, Dichlorbenzoat, Hydroxybenzoat, Aminobenzoat, Phthalat, Terephthalat, Indolylacetat, Chlorbenzolsulfonat, Benzolsulfonat, Toluolsulfonat, Biphenylsulfonat und Chlortoluolsulfonat.

Als gegebenenfalls substituierte Alkylreste B, $B^1$ und $B^2$ sind die auch für R genannten möglich. Gegebenenfalls substituierte Benzylreste können z.B. durch Chlor, Methyl, Äthyl, Methoxy, Äthoxy oder Cyan substituiert sein.

Zur Herstellung der Verbindungen der Formel I kann man z.B. Verbindungen der Formel II

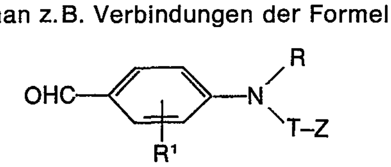

II

mit Verbindungen der Formel III

$AH_2$ III

umsetzen, Z ist dabei eine als Anion abspaltbare Gruppe, z.B. $Cl^{\ominus}$, $Br^{\ominus}$, $J^{\ominus}$, $CH_3SO_4^{\ominus}$ oder

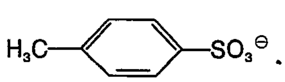

.

Von besonderer Bedeutung sind Verbindungen der Formel Ia

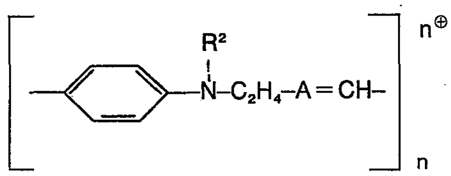

$n \cdot A^{\ominus}$ Ia,

in der $R^2$ $C_1$- bis $C_4$-Alkyl ist und A, $M^{\ominus}$ und n die angegebene Bedeutung haben.

Bevorzugte Reste A sind z.B.

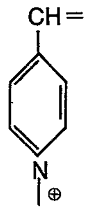

,

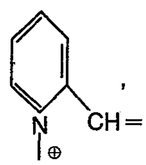

,

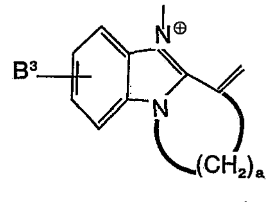

,

wobei

$B^3$ Wasserstoff, Chlor oder $C_1$- bis $C_4$-Alkyl sein kann und

a die angegebene Bedeutung hat.

Zwckmässigerweise erhitzt man die Komponenten mit oder ohne Lösungsmittel auf höhere Temperatur, beispielsweise 30 bis 200 °C, vorzugsweise 60 bis 150 °C, und gibt dann ein Kondensationsmittel wie Säuren oder Basen zu. Im einzelnen sind als Kondensationsmittel, z.B. NaOH, KOH, MgO, $CA(OH)_2$, primäre, sekundäre oder tertiäre Amine oder HCl, HCOO HCOOH, $CH_3COOH$, Toluolsulfonsäure, Zinkchlorid sowie Mischungen wie $NaOOCH_3/CH_3COOH$, Triäthylamin/$CH_3COOH$ zu nennen.

Einzelheiten der Reaktionsführung können den Beispielen entnommen werden, in denen sich Angaben über Teile und Prozente, sofern nicht anders vermerkt, auf das Gewicht beziehen.

Die Verbindungen der Formel I eignen sich insbesondere zum Färben und Bedrucken von Papier; sie zeichnen sich durch hohe Substantivität und Affinität aus, das heisst, die Abwässer sind praktisch farblos.

Der Polymerisationsgrad der Verbindungen wird weitgehend durch die Temperaturführung beeinflusst. Die viskosimetrischen Werte einer 5-prozentigen wässrigen Lösung liegen zwischen

$$\frac{\eta}{c} = 0{,}05\ [\frac{100\ ml}{g}] \text{ und } \frac{\eta}{c} = 0{,}3\ [\frac{100\ ml}{g}],$$

wobei kleine $\frac{\eta}{c}$-Werte bei niedrigen Reaktionstemperaturen gefunden werden und grosse $\frac{\eta}{c}$-Werte bei hohen Temperaturen.

Als Endgruppen für die Verbindungen der Formel I kommen synthesebedingt die Reste

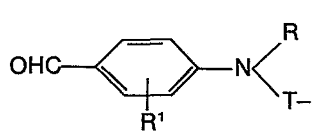

oder $-AH_2^{\oplus}$

in Betracht, deren reaktive Zentren gegebenenfalls noch weiter umgesetzt sein können, beispielsweise die Aldehydgruppe mit Malodinitril oder die $-AH_2^{\oplus}$-Gruppe mit einem Aldehyd wie Benzaldehyd.

Bei der Herstellung der Verbindungen der Formel I können selbstverständlich auch Mischungen von Verbindungen der Formel II und/oder III miteinander umgesetzt werden, dadurch lassen sich beispielsweise Farbton und Löslichkeitseigenschaften beeinflussen.

Beispiel 1

Eine Lösung von 21 g N-Äthyl-N-(2-chloräthyl)-p-aminobenzaldehyd und 10 g γ-Picolin in 50 ml Thiodiglycol wird 1 Stunde auf 140 °C erhitzt. Anschliessend wird auf 90 °C abgekühlt, man gibt 10 ml Pyrrolidin zu und erhitzt wiederum 1 Stunde auf 140 °C. Durch Zugabe von 40 g Eisessig wird eine ca. 25prozentige Flüssigeinstellung des Farbstoffs der Formel (4)

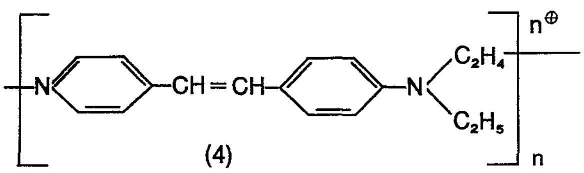

n $Cl^{\ominus}$

(4)

erhalten. Der Farbstoff ist in Wasser gut löslich und färbt eine Mischung aus 60% Holzschliff und 40% gebleichtem Sulfitzellstoff mit roter Farbe. Das Abwasser ist farblos. Zu weiteren hochsubstantiven, sowohl für holzschliffhaltiges Papier wie auch für gebleichte und ungebleichte Zellstoffe geeigneten Farbstoffen gelangt man durch die in der folgenden Tabelle angegebenen Variationen der Reaktionsbedingungen:

Tabelle I
Mengen an eingesetzten Chemikalien wie in Beispiel 1

| Temperatur vor Zugabe von Pyrrolidin (°C) | Reaktions-zeit (h) | Pyrrolidinzugabe bei (°C) | weitere Reaktions-temperatur (°C) | Zeit |
|---|---|---|---|---|
| 170 | 0,3 | 90 | 140 | 1 |
| 160 | 0,5 | 90 | 90 | 1 |
| 140 | 1 | 60 | 60 | 2 |
| 150 | 1 | 70 | 70 | 2 |
| 140 | 0,2 | 80 | 80 | 2 |
| 140 | 0,5 | 60 | 60 | 1 |
| 140 | 0,3 | 60 | 80 | 1 |
| 130 | 1 | 80 | 80 | 1 |
| 130 | 0,5 | 80 | 80 | 1 |
| 130 | 2 | 60 | 60 | 2 |
| 130 | 0,2 | 80 | 80 | 1 |
| 130 | 4 | 60 | 60 | 1 |
| 120 | 2 | 80 | 80 | 2 |
| 120 | 4 | 60 | 70 | 2 |
| 120 | 6 | 60 | 60 | 2 |
| 110 | 4 | 90 | 90 | 2 |
| 110 | 8 | 60 | 70 | 1 |
| 110 | 12 | 70 | 70 | 1 |
| 140 | 1 | 90 | 130 | 1 |
| 140 | 1 | 90 | 120 | 1 |
| 140 | 1 | 90 | 110 | 1 |
| 140 | 1 | 90 | 100 | 1 |
| 140 | 1 | 90 | 90 | 1 |

Die Farbstoffe sind alle rot bis rotorange.

Zu Flüssigeinstellungen dieser sowie aller in den folgenden Beispielen beschriebenen Farbstoffe gelangt man durch Zugabe von wasserlöslichen Säuren, wie verd. HCl, verd. $H_2SO_4$, Eisessig, Ameisensäure, Acrylsäure, Glyoxylsäure und/oder Wasser zu den Reaktionsgemischen. Die Substantivität der Farbstoffe nimmt mit sinkender Reaktionstemperatur gerinfügig ab, gegenläufig dazu erhält man eine Steigerung der Brillanz der Färbungen. Als Lösungsmittel für die Reaktion kommen neben Glykol eine grosse Anzahl anderer wasserlöslicher organischer Lösungsmittel in Betracht.

Beispielsweise seien genannt:

Methanol, Äthanol, n- und iso-Propanol, zwei- und mehrwertige Alkohole sowie deren wasserlösliche Teil- oder Volläther oder -ester wie Propylenglykol, Äthylenglykolmonomethyläther, Äthylenglykoldimethyläther, Glycerin, Glycerinmonomethyläther, Glykolmonoacetat oder Glycerinmonoacetat sowie wassermischbare Säureamide wie DMF oder Formamid oder Lösungsmittel wie Thiodiglykol und Dimethylsulfoxid.

Die bei Beispiel 1 durchgeführten Variationen in der Temperaturführung sind, sofern nicht anders vermerkt, exemplarisch für alle folgenden Beispiele.

Beispiel 2

Eine Lösung von 21 g N-Äthyl-N-(2-chloräthyl)-p-aminobenzaldehyd und 10 g γ-Picolin in 50 ml Glykol wird 1 Stunde auf 150 °C erhitzt. Anschliessend kühlt man auf 110 °C ab, gibt 50 g Eisessig und 5 g Piperidin zu und erhitzt nochmals 3 Stunden auf 120 °C. Man erhält einen rot-orangefarbenen Farbstoff der Formel (4) mit ähnlichen Eigenschaften wie der in Beispiel 1 beschriebene Farbstoff. Die Variation der Reaktionstemperatur führt auch hier zu ähnlichen Ergebnissen wie bei Beispiel 1.

Beispiel 3

Eine Lösung von 21 g N-Äthyl-N-(2-chloräthyl)-p-aminobenzaldehyd und 10 g γ-Picolin in 50 ml Eisessig wird 1 Stunde auf 140 °C erhitzt. Anschliessend werden bei 90 °C langsam 5 g Triäthylamin eingetropft und es wird weitere 6 Stunden unter Rückfluss erhitzt. Man erhält die Flüssigeinstellung eines Farbstoffs der Formel (4), der Papiere in brillanten Orangetönen färbt.

Beispiel 4

Anstelle von 10 g γ-Picolin werden nach der Vorschrift von Beispiel 1 sowie entsprechend Tabelle I 10 g α-Picolin eingesetzt. Es werden Orange-Farbstoffe der Formel (5) erhalten:

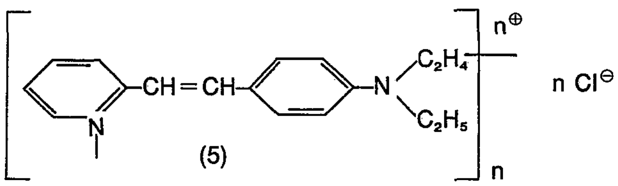

(5)

Die Farbstoffe sind in Wasser gut löslich und färben Holzschliff, gebleichten und ungebleichten Zellstoff sowie Mischungen dieser Stoffe in Orangetönen. Die Abwässer sind farblos oder nur schwach gefärbt.

Beispiel 5

22 g N-Äthyl-N-(2-chloräthyl)-p-aminobenzaldehyd und 17 g 6-Methyl-pyrrolidino-[1,2-a]-benzimidazol werden in 25 ml Thiodiglykol gelöst und 2 Stunden auf 140 °C erhitzt. Anschliessend werden 10 g Pyrrolidin zugegeben, und es wird eine weitere Stunde auf 70 °C erhitzt. Durch Zugabe von 50 ml Eisessig wird eine ca. 30prozentige Flüssigeinstellung eines gelben Farbstoffs der folgenden Formel (6) erhalten:

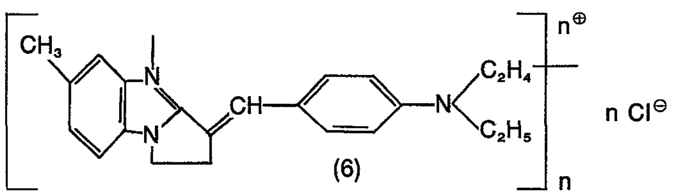

(6)

Die Variationen der Versuchsbedingungen analog Beispiel 1 liefern ebenfalls gelbe, gut wasserlösliche Farbstoffe, die in ihren färberischen Eigenschaften denen der Tabelle I ähnlich sind.

Beispiel 6

Anstelle von 17 g 6-Methyl-Pyrrolidino-1.2a-benzimidazol werden bei im übrigen gleichen Reaktionsbedingungen wie in Beispiel 5 16 g pyrrolidino-[1,2-a]-benzimidazol verwendet. Man gelangt zu Farbstoffen der Formel (7)

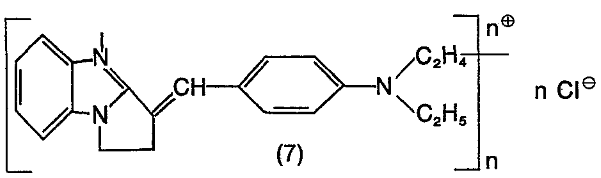

(7)

die ähnliche Eigenschaften wie die im Beispiel 5 beschriebenen haben.

Beispiel 7

Statt 17 g 6-Methyl-pyrrolidino-[1,2-a]-benzimidazol werden bei ansonsten gleichen Reaktionsbedingungen wie in Beispiel 5 20 g 6-Chlorpyrrolidino-[1,2-a]-benzimidazol eingesetzt. Man gelangt zu Farbstoffen der Formel (8)

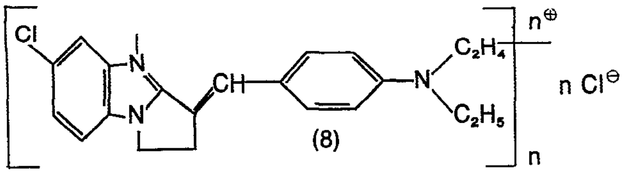

(8)

Beispiel 8

22 g N-Äthyl-N-(2-chloräthyl)-p-aminobenzaldehyd und 18 g Piperidino-[1,2-a]-benzimidazol werden in 25 ml Glykol gelöst und 2 Stunden auf 140 °C erhitzt. Anschliessend wird auf 90 °C abgekühlt, es werden 20 g Piperidin zugegeben und es wird weitere 4 Stunden auf 90 °C erhitzt. Durch Zugabe von Eisessig erhält man eine Flüssigeinstellung des Farbstoffs der Formel (9)

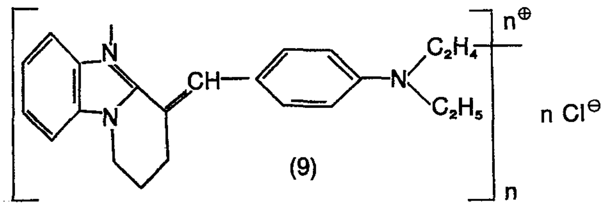

(9)

Der Farbstoff färbt Papiermaterialien in gelben Tönen bei guten Abwasserqualitäten.

Die bereits beschriebenen wie auch die folgenden polymeren oder oligomeren Farbstoffe können auch als kristalline oder amorphe Pulver erhalten werden:

Dazu giesst man z.B. die Reaktionsmischung, enthaltend einen Farbstoff der Formel (4), auf 200 g Wasser und fällt den Farbstoff durch Zugabe von Salzen, z.B. NaCl aus, saugt ab und trocknet. Die so erhaltenen Pulverfarbstoffe eignen sich ebenfalls zum Färben von Papier.

Beispiel 9

Eine Lösung von 24 g N-Methyl-N-(3-Chlorpropyl)-p-amino-benzaldehyd und 10 g γ-Picolin in 25 ml Glykol wird 2 Stunden auf 150 °C erhitzt. Anschliessend wird auf 70 °C abgekühlt, man gibt 10 g Pyrrolidin zu und erhitzt weitere 2 Stunden auf 70 °C. Durch Zugabe von Eisessig erhält man die Flüssigeinstellung eines Farbstoffs der Formel (10)

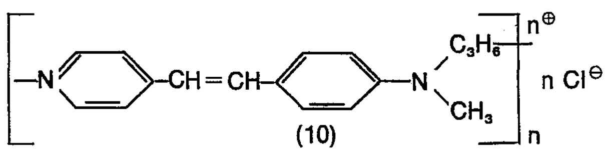

(10)

Folgende Variationen der Reaktionsparameter wurden durchgeführt:

| Temperatur vor Zugabe von Pyrrolidin (°C) | Reaktions-zeit (h) | Pyrrolidinzugabe bei (°C) | weitere Reaktions-temperatur (°C) | Zeit (h) |
|---|---|---|---|---|
| 180 | 1 | 90 | 120 | 1 |
| 170 | 1 | 90 | 60 | 3 |
| 160 | 2 | 70 | 110 | 2 |
| 150 | 2 | 80 | 70 | 1 |
| 140 | 3 | 70 | 90 | 1 |
| 130 | 3 | 60 | 100 | 1 |
| 120 | 5 | 70 | 120 | 2 |
| 110 | 12 | 80 | 110 | 1 |
| 90 | 24 | 70 | 60 | 1 |

Die Eigenschaften der so erhaltenen Farbstoffe sind mit denen aus Beispiel 1 vergleichbar.

Beispiel 10

Bei Verwendung von 25 g N-Methyl-N-(3-chlor-2-hydroxypropyl)-p-aminobenzaldehyd anstelle von 24 g N-Methyl-N-(3-chlorpropyl)-p-aminobenzaldehyd in Beispiel 9, bei im übrigen gleichen Bedingungen, gelangt man zu Farbstoffen der Formel (11)

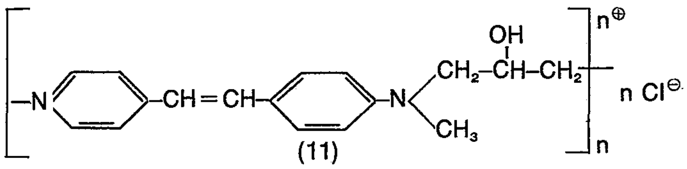

(11)

mit ähnlichen färberischen Eigenschaften. Die Farbstoffe färben Papier in orange-roten Tönen.

Beispiel 11

Eine Lösung von 19 g N-Methyl-2-cyanmethylbenzimidazol und 21 g N-Äthyl-N-(2-chloräthyl)-p-aminobenzaldehyd in 25 ml Glykol wird 1 Stunde auf 140 °C erhitzt. Danach wird auf 90 °C abgekühlt, mit 5 ml Piperidin versetzt und 3 Stunden auf 110 °C erhitzt. Durch Zugabe von 30 g Ameisensäure erhält man die Flüssigeinstellung eines gelben Farbstoffs der Formel (13), der zum Färben von Papier geeignet ist.

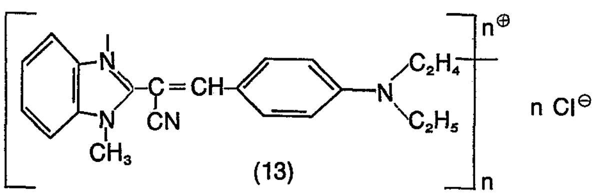

(13)

Beispiel 12

Ersetzt man das N-Methyl-2-cyanmethylbenzimidazol in Beispiel 12 durch 10 g 2-Cyanmethylbenzthiazol, so gelangt man zu einem Orange-Farbstoff der Struktur (14)

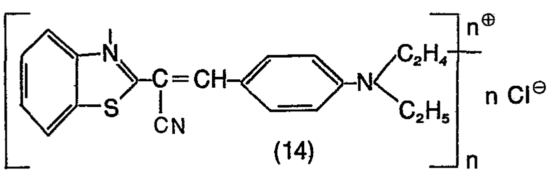

(14)

mit ähnlichem färberischem Verhalten.

Beispiel 13

Ersetzt man das N-Methyl-2-cyanmethylbenzimidazol in Beispiel 12 durch 19 g 2-Cyanmethylbenzoxazol, so gelangt man zu einem Orange-Farbstoff mit ähnlichem färberischem Verhalten der Struktur (15)

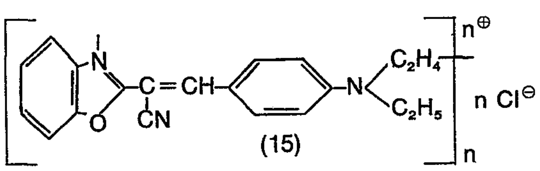

(15)

Beispiel 14

Eine Lösung von 9 g γ-Picolin, 2 g Pyrrolidino-[1,2-a]-benzimidazol und 21 g N-Äthyl-N-(2-chloräthyl)-p-aminobenzaldehyd in 25 ml Glykol wird 1 Stunde auf 140 °C erhitzt, anschliessend kühlt man auf 80 °C ab, gibt 10 ml Pyrrolidin zu und erhitzt noch 2 Stunden auf 80 °C. Durch Zugabe von 50 ml Eisessig wird eine ca. 30prozentige Flüssigeinstellung eines Orange-Farbstoffs erhalten. Im Farbton ist der Farbstoff vergleichbar mit einer Mischung aus 90% des Farbstoffs aus Beispiel 1 (dargestellt unter denselben Reaktionsbedingungen) und 10% des Farbstoffs aus Beispiel 6 (dargestellt unter denselben Reaktionsbedingungen).

Es ist naheliegend, als chemische Struktur ein Mischpolymeres aus den Strukturen aus Beispiel 1 und 6 anzunehmen, wenngleich nicht ausgeschlossen werden kann, dass auch einheitliche Polymere der in Frage kommenden Strukturen vorliegen.

Durch Variation des Mengenverhältnisses der eingesetzten Komponenten kann eine Verschiebung des Farbtons erreicht werden, wie es etwa auch durch Mischen der einzelnen reinen Komponenten geschehen könnte. Die so erhaltenen Farbstoffe sind gut wasserlöslich, die Abwässer beim Färben von Papier sind farblos oder schwach gefärbt.

Beispiele für Variationen der Mengenverhältnisse:

| % der Reaktanten aus Beispiel 1 | % der Reaktanten aus Beispiel | | Farbton |
|---|---|---|---|
| 10 | 90 | 5 | rotstichig gelb |
| 20 | 80 | 6 | rotstichig gelb |
| 30 | 70 | 5 | orange |
| 40 | 60 | 5 | orange |
| 50 | 50 | 6 | orange |
| 60 | 40 | 6 | orange |
| 70 | 30 | 6 | orange |
| 80 | 20 | 6 | orange |

Beispiel 15

Eine Lösung von 14,2 g Chinaldin und 21 g N-Methyl-N-(2-chloräthyl)-p-aminobenzaldehyd in 25 ml Glykol wird 2 Stunden auf 140 °C erhitzt. Anschliessend wird die Temperatur auf 60 °C gesenkt, man gibt 15 ml Pyrrolidin zu und erhitzt weitere 2 Stunden auf 60 °C. Durch Zugabe von 20 ml Eisessig und 10 ml Wasser gelangt man zur Flüssigeinstellung eines rotvioletten Farbstoffs der Struktur (16)

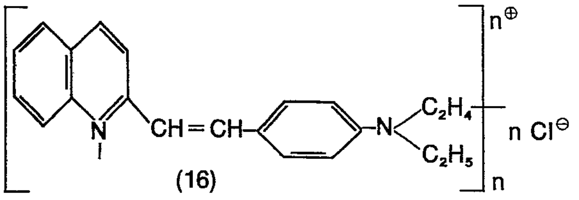

(16)

Der Farbstoff eignet sich zum Färben von Papier.

Beispiel 16

Eine Lösung von 14,2 g Chinaldin und 21 g N-Methyl-N-(2-bromäthyl)-p-aminobenzaldehyd in 25 ml Glykol wird 1 Stunde auf 140 °C erhitzt. Anschliessend wird wie in Beispiel 16 verfahren. Der so erhaltene Farbstoff ist gut löslich in Wasser und gleicht im Farbton und in den färberischen Eigenschaften dem Farbstoff aus Beispiel 16.

Beispiel 17

Setzt man statt Chinaldin in Beispiel 16 und 17 14,2 g 4-Methylchinolin ein, so gelangt man zu Farbstoffen der Struktur (17), die ein geringfügig blaustichigeres Violett zeigen bei ansonsten ähnlichem färberischem Verhalten und guter Löslichkeit.

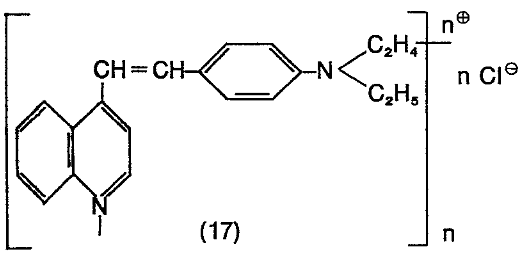

(17)

Beispiel 18

50 g Altpapier (holzhaltig) werden in einem Liter Wasser bei Raumtemperatur (12° dH) zu einer Fasersuspension aufbereitet und anschliessend mit gleichem Wasser auf 2 Liter verdünnt. Zu dieser Suspension gibt man 10 g einer 2prozentigen wässrigen Lösung des Farbstoffs aus Beispiel 1 und rührt noch 2 Minuten nach. Die Stoffsuspension wird dann mit Wasser zu einer 0,5prozentigen Suspension verdünnt. Es werden nach bekannten Verfahren Papierblätter von 100 g/m² gebildet, die eine helle Orangefärbung mit sehr guten Ausblutechtheiten aufweisen. Das Abwasser ist farblos.

Beispiel 19

150 g Altpapier (holzhaltig) werden in Pulver gemeinsam mit 250 g gebleichtem Holzschliff und 100 g ungebleichtem Sulfatzellstoff zu einer 3prozentigen wässrigen Suspension aufgeschlagen, mit Wasser auf 2% verdünnt und mit 0,5% löslicher, oxidativ abgebauter Maisstärke sowie 5% Kaolin versetzt. Sodann werden 10 g einer 5prozentigen wässrigen Lösung des Farbstoffs aus Beispiel 1 zugesetzt und es wird 2 Minuten gerührt. Nach bekannten Verfahren, z. B. mit einem Labor-Blattbildner der Firma Franck erhält man Papierblätter von 80 g/m², die orange gefärbt sind und sehr gute Ausblutechtheiten haben. Das Abwasser ist farblos.

Beispiel 20

1 000 g einer 2,5prozentigen Suspension eines Gemisches aus 60% Holzschliff und 40% ungebleichtem Sulfitzellstoff in Wasser werden mit 5 ml einer 1prozentigen Lösung des Farbstoffs aus Beispiel 5 versetzt und 1 Minute nachgerührt. Nach bekannten Verfahren wird daraus ein Papierbogen von 80 g/m² gebildet. Das Papier zeigt eine kräftige gelbe Farbe bei sehr guten Ausblutechtheiten. Das Abwasser ist nur sehr schwach gefärbt.

Beispiel 21

1 000 g einer 2,5prozentigen Suspension von gebleichtem Sulfitzellstoff in Wasser werden mit 5 ml einer 1prozentigen Lösung des Farbstoffs aus Beispiel 6 versetzt und 1 Minute gerührt. Es wird ein Papierbogen von 50 g/m² gebildet. Das Papier zeigt eine intensive grüngelbe Färbung von sehr guter Ausblutechtheit. Das Abwasser ist sehr schwach gefärbt.

Die auf Seite 9 erwähnte Absättigung von Endgruppen kann auch zur Herstellung bestimmter Farbnuancen verwendet werden.

Versetzt man z. B. bei der Synthese des Farbstoffs aus Beispiel 1 vor oder nach der Zugabe von Eisessig das Reaktionsgemisch mit 3 Gramm der Verbindung der Formel

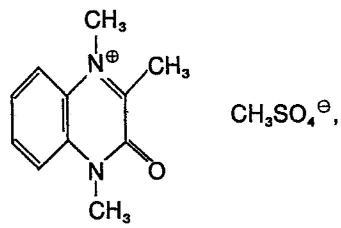

so gelangt man über eine Kondensation mit den endständigen Aldehydgruppen des polymeren Farbstoffs zu einer Verbindung, bei der der Farbton nach rotbraun verschoben ist und die gute Affinität zu gebleichten, ungebleichten und holzhaltigen Papieren aufweist.

Zur Nuancierung können ganz allgemein methylenaktive Verbindungen benutzt werden, die bei der Kondensation mit einem p-Aminobenzaldehyd farbige Verbindungen liefern und die im Farbton nicht mit der zu nuancierenden Verbindung übereinstimmen.

In analoger Weise können auch die carbonylgruppenhaltigen Verbindungen zur Nuancierung verwendet werden, sofern sie andersfarbige Kondensationsprodukte liefern.

So erhält man z. B. durch Zugabe von 2 Gramm p-Dimethylaminobenzaldehyd zu der Reaktionsmischung von Beispiel 5 bei 60 °C vor der Zugabe von Eisessig eine Farbtonverschiebung nach rot.

**Patentansprüche**

1. Farbige polymere Verbindungen der allgemeinen Formel

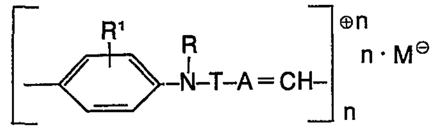

in der

A der Rest einer quarternierten, methylenaktiven Verbindung,

R gegebenenfalls substituiertes Alkyl, Cycloalkyl oder Phenyl,

$R^1$ Wasserstoff, Chlor, Brom, Hydroxy, $C_1$- bis $C_4$-Alkyl oder $C_1$- bis $C_4$-Alkoxy, Aminocarbonyl, Methoxycarbonyl, Äthoxycarbonyl, Nitro,

T einen gegebenenfalls durch Halogen, $C_1$–$C_4$-Alkoxy oder Hydroxy substituierten Alkylenrest oder einen Rest der Formel

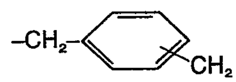 ,

$M^\ominus$ ein Anion und

n eine Zahl > 1 bedeuten.

2. Verbindungen gemäss Anspruch 1 der Formel

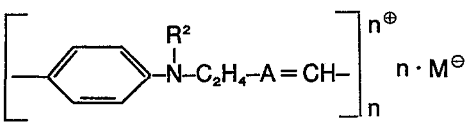

in der

$R^2$ $C_1$- bis $C_4$-Alkyl ist und

A, $M^\ominus$ und n die angegebene Bedeutung haben.

3. Verfahren zur Herstellung von Verbindungen gemäss Anspruch 1, dadurch gekennzeichnet, dass man Verbindungen der Formel II

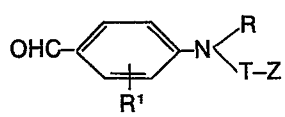

mit Verbindungen der Formel III

$$AH_2$$

umsetzt, Z ist dabei eine als Anion abspaltbare Gruppe.

4. Verwendung der Verbindungen gemäss Anspruch 1 zum Färben von Papier.

**Claims**

1. A coloured polymeric compound of the general formula

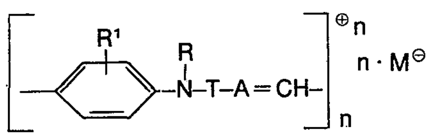

where A ist the radical of a quaternized, methylene-active compound, R is unsubstituted or substituted alkyl, cycloalkyl or phenyl, $R^1$ is hydrogen, chlorine, bromine, hydroxyl, $C_1$–$C_4$-alkyl, $C_1$–$C_4$-alkoxy, aminocarbonyl, methoxycarbonyl, ethoxycarbonyl or nitro, T is alkylene which is unsubstituted or substituted by halogen, $C_1$–$C_4$-alkoxy or hydroxyl, or is a radical of the formula

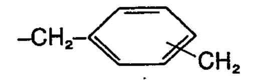 ,

$M^\ominus$ is an anion and n is a number > 1.

2. A compound as claimed in claim 1, of the formula

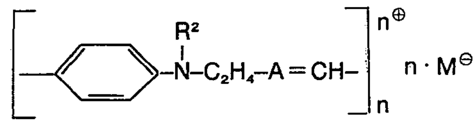

where $R^2$ is $C_1$–$C_4$-alkyl and A, $M^\ominus$ and n have the stated meanings.

3. A process for the preparation of a compound as claimed in claim 1, characterized in that a compound of the formula II

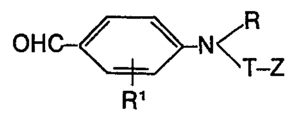

is reacted with a compound of the formula III

$$AH_2,$$

Z being a group which can be eliminated as an anion.

4. Use of a compound as claimed in claim 1 for colouring paper.

**Revendications**

1. Composés polymères colorés de la formule générale

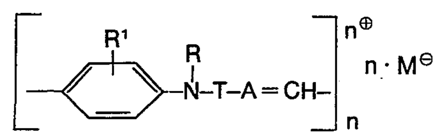 (I),

dans laquelle

A représente le reste d'un composé méthylène-actif quaternisé;

R représente un groupe alcoyle, cyclo-alcoyle ou phényle éventuellement substitué;

$R^1$ désigne un atome d'hydrogène, de chlore ou de brome ou un groupe hydroxy, alcoyle en $C_1$ à $C_4$, alcoxy en $C_1$ à $C_4$, amino-carbonyle, méthoxycarbonyle, éthoxycarbonyle ou nitro;

T représente un reste alcoylène éventuellement substitué par de l'halogène, un radical alcoxy en $C_1$ à $C_4$ ou hydroxy ou un groupe de la formule

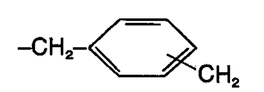 ,

$M^\ominus$ désigne un anion et

n est un nombre supérieur à 1.

2. Composés suivant la revendication 1, de la formule

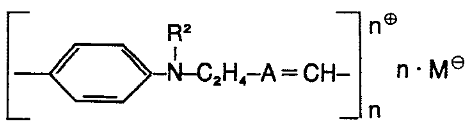

dans laquelle

$R^2$ désigne un radical alcoyle en $C_1$ à $C_4$ et

A, $M^{\ominus}$ et n possèdent la signification définie.

3. Procédé de préparation de composés suivant la revendication 1, caractérisé en ce que l'on fait réagir un composé de la formule II

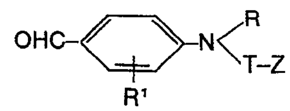

où Z désigne un groupe clivable comme anion, avec un composé de la formule III

$AH_2$

4. Utilisation des composés suivant la revendication 1 pour la coloration de papier.